# EUROPEAN PATENT APPLICATION

(11) **EP 2 746 027 A1**
(43) Date of publication of application: **25.06.2014**
(21) Application number: 12197753.2
(22) Date of filing: 18.12.2012
(51) Int. Cl.: B29C 45/16, B24D 9/08, B24D 18/00, B29K 105/06, B29K 75/00, B29K 63/00

(54) **Grinding disc and method for manufacturing the same**

(71) Applicant: Chen, Bach Pangho, Claremont, CA 91711 (US)
(72) Inventor: Chen, Bach Pangho, Claremont, CA California 91711 (US)
(74) Representative: 2K Patentanwälte Blasberg Kewitz & Reichel

(57) **Abstract**

A method for manufacturing a grinding disc comprising: injecting a first injection plastic material on a mandrel (20) to form a preliminary carrier disc (21), the preliminary carrier disc (21) including a first embedding portion for completely encircling the embedding section, and a carrier portion extended from a periphery of the first embedding portion; and injecting a second injection plastic material on the preliminary carrier disc to form a secondary carrier disc (22), the secondary carrier disc including an engaging portion adhered to and supported by the carrier portion, and a mounting surface (222) opposite to the engaging portion. Thus, the grinding disc is adapted to quickly produce appropriate deformation according to contours of a grinding target for preferred grinding effects.

## Description

### FIELD OF THE INVENTION

The present invention relates to a grinding disc and a method for manufacturing the same, and particularly to a grinding disc formed by injection of a first injection plastic material and a second injection plastic material and a method for manufacturing the same.

### BACKGROUND OF THE INVENTION

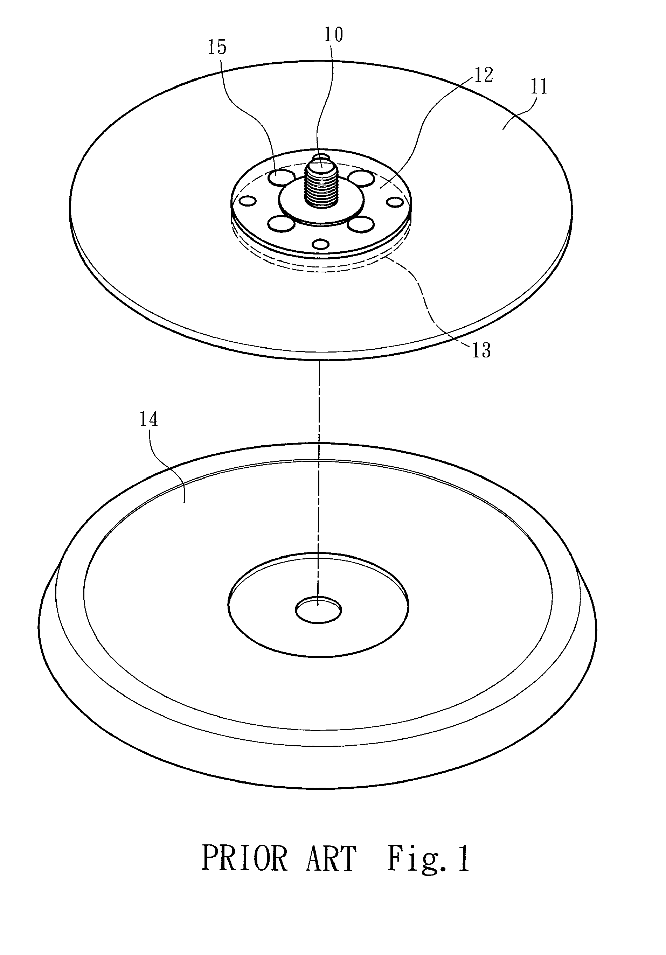

Current grinding operations are generally performing by a grinding machine tool. A common grinding machine tool is as disclosed by Taiwan Patents M436536, M438344, I356748 and I267426, and usually includes an electric motor and a grinding disc. A grinding plate is disposed at the bottom of the grinding disc and is propelled by the electric motor, such that the grinding disc grinds an edge of a grinding target by the grinding plate rotating at a high speed. Apart from an electric motor, a common grinding machine tool may also implement an air motor as a power source. Implementation details of an air motor are the same as those of an electric motor, and shall be omitted herein. Referring to FIG. 1, a common grinding disc comprises a mandrel 10, a supporting disc 11, an upper clamping disc 12, a lower clamping disc 13 and a foam supporting body 14. To assemble the grinding disc, the upper clamping disc 12 and the lower clamping disc 13 are respectively superimposed at two sides of the supporting disc 11. The upper clamping disc 12, the lower clamping disc 13 and the supporting disc 11 are assembled and fastened by at least one fastening member 15. The mandrel 10 is inserted through the upper clamping disc 12, the lower clamping disc 13 and the supporting disc 11 to complete a semi-manufactured grinding disc. The semi-manufactured grinding disc is then placed in a foaming mold, which applies foams on the semi-manufactured grinding disc to form the foam supporting body 14 on the supporting disc 11, thereby completing the grinding disc. The grinding plate (not shown) is installed on the foam supporting body 14.

To maintain an eccentric balance of the grinding machine tool, a counterweight ratio of each structure is adjusted according to the balances during a design process of a common grinding disc. Therefore, grinding disc of all models and sizes have specified and regulated weights. As a semi-manufactured grinding disc before the foaming process takes up 80% of a total weight of the grinding disc, the foam supporting body 14 is allotted with only 20% of the total weight of the grinding disc. The foam supporting body 14 is capable of producing appropriate deformation during the grinding process of the grinding machine tool to be closely adhered to the grinding plate on the grinding target. Since the foaming level of the foam supporting body 14 determines the structural strength, the foam supporting body 14 needs to foam at a high level under weight restrictions, such that the foam supporting body 14 has a loose structure that can be easily damaged during the grinding process. An over-foamed foam supporting body 14 is similar to a sponge, which cannot produce appropriate deformation according to contours of the grinding target during the grinding process nor quickly restore to a normal state, and is thus not suitable for ideal applications. Further, restrained by the unsatisfactory structural strength of the foam supporting body 14, the grinding machine tool is incapable of performing high-speed grinding operations. During high-speed grinding operations, the foam supporting body 14 may not withstand the centripetal force brought by the high-speed rotations and thus becomes damaged. Therefore, there is a need for an improved grinding disc for providing preferred grinding effects.

### SUMMARY OF THE INVENTION

It is an object of the present invention to provide an enhanced method for manufacturing a grinding disc that can at least partially overcome the above shortcomings. It is a further object of the present invention to provide an enhanced grinding disc that can at least partially overcome the above shortcomings.

The above problems are solved by a method for manufacturing a grinding disc according to claim 1 and by a grinding disc according to claim 5. Further advantageous embodiments are the subject-matter of the dependent claims.

In brief, the subject-matter of the present application can overcome in particular the incapability of quickly producing appropriate deformation adapting to grinding requirements due to a unsatisfactory structural strength of a foam supporting body in a conventional grinding disc and a manufacturing method of a conventional grinding disc.

To achieve the above object, a method for manufacturing a grinding disc is provided by the present invention. The method includes the following steps.

A mandrel is provided. The mandrel comprises a bridge section and an embedding section extended from the bridge section.

A first injection molding step is performed. The mandrel is placed in a first injection mold, and the first injection mold at least injects a first injection plastic material on the mandrel. When cooled, the first injection plastic material forms a preliminary carrier disc. The preliminary carrier disc comprises a first embedding portion completely encircling the embedding section, and a carrier portion extending towards a periphery of the first embedding portion.

A second injection molding step is then performed. The mandrel embedded with the preliminary carrier disc is placed in a second injection mold, and the second injection mold at least injects the second injection plastic material on the preliminary carrier disc. When cooled, the second injection plastic material forms a secondary carrier disc fixed at the preliminary carrier disc. The secondary carrier disc comprises an engaging portion adhered to and supported by the carrier portion, and a mounting surface opposite to the engaging portion.

In an embodiment of the above method, after completing the first injection molding step, the preliminary carrier disc further comprises a second embedding portion formed on the carrier portion. Further, after completing the first injection molding step, the secondary carrier disc further comprises a third embedding portion extended from the engaging portion and corresponding to the second embedding portion.

In an embodiment of the above method, the first injection plastic material is a mixed plastic material having fiberglass; the second injection plastic material is a plastic material made of a group selected from polyurethane, epoxy, unsaturated polyester, and phenol aldehyde.

Another object of the present invention is to provide an enhanced grinding disc. The grinding disc according to the present invention can be assembled to a machine tool and be propelled by the machine tool for rotations. The grinding disc comprises a mandrel, a preliminary carrier disc formed by an injection plastic material and embedded on the mandrel, and a secondary carrier disc formed by a second injection plastic material and fixed on the preliminary carrier disc. The mandrel comprises a bridge section for connecting to the machine tool, and an embedding section extended from the bridge section. The preliminary carrier disc comprises a first embedding portion for completely encircling an embedding section of the mandrel, and a carrier portion extending towards the periphery of the first embedding portion. The secondary disc comprises the engaging portion adhered to and supported by the carrier portion, and a mounting surface opposite to the engaging portion and for assembling to the grinding plate.

In an embodiment of the above grinding disc, the preliminary carrier disc further comprises a second embedding portion formed on the carrier portion for increasing an engaging area between the preliminary carrier disc and the second carrier disc. The secondary carrier disc further comprises a third embedding portion extended from the engaging portion and for embedding with the second embedding portion. Further, the second embedding section is disposed at a periphery of the carrier portion or neighboring to the first embedding portion.

In an embodiment of the above grinding disc, the first injection plastic material is a mixed plastic material having fiberglass; the second injection plastic material is a plastic material made of a group selected from polyurethane, epoxy, unsaturated polyester, and phenol aldehyde.

In the grinding disc and the method for manufacturing the grinding disc, the first injection plastic material and the second injection plastic material are sequentially injected on the mandrel to form the preliminary carrier disc. The preliminary carrier disc comprises the first embedding portion for completely encircling the embedding section of the mandrel and the carrier portion extending towards the periphery of the first embedding portion. The second plastic material is then injected on the preliminary carrier disc to form the secondary carrier disc. The secondary disc comprises the engaging portion adhered to and supported by the carrier portion, and the mounting surface opposite to the engaging portion and for assembling to the grinding plate. Therefore, compared to a conventional grinding disc, the grinding disc of the present invention features the advantages below.

First of all, the preliminary carrier disc is lighter in overall weight. As the preliminary carrier disc is formed by injection of the first injection plastic material on the mandrel and has a weight far lighter than the weight of the structure of a conventional grinding disc formed by the upper clamping disc, the lower clamping disc and the supporting disc, the secondary carrier disc is allotted with a greater percentage in the overall weight of the grinding disc.

Secondly, the secondary carrier disc offers preferred structural strength. Since the secondary carrier disc of the present invention is made of a non-foaming material and occupies a greater percentage in the overall weight, the structural strength and ductility of the secondary carrier disc can be increased. Thus, the secondary carrier disc is allowed to more closely conform and be in closer contact with the grinding target, and can be implemented to machine tools operating at high rotational speeds to yield preferred grinding effects.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is an exploded view of a conventional grinding disc.
FIG. 2 is a flowchart of a method for manufacturing a grinding disc according to an embodiment of the present invention.
FIG. 3 is an exploded view of a grinding disc according to an embodiment of the present invention.
FIG. 4 is an exploded view from another viewing angle of a grinding disc according to an embodiment of the present invention.
FIG. 5A is a sectional view of a first injection molding step according to an embodiment of the present invention.
FIG. 5B is a sectional view of a second injection molding step according to an embodiment of the present invention.
FIG. 6 is a schematic diagram of a grinding disc in use according to an embodiment of the present invention.

### DETAILED DESCRIPTION OF THE PREFERRED EMBODIMENTS

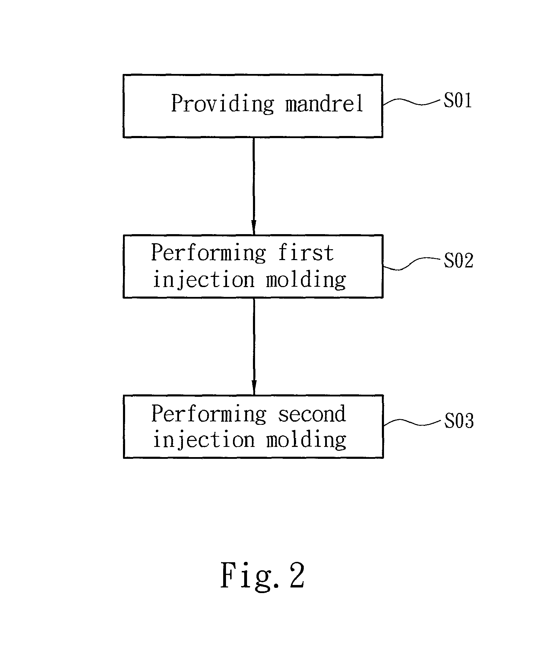

A disc according to the present invention is configured to be assembled to a machine tool (not shown) and to be propelled by the machine tool for rotations, such that a grinding plate assembled on the grinding disc is allowed to perform grinding operations. The grinding disc is formed by a first injection plastic material and a second injection plastic material injected in sequence. More specifically, the method for manufacturing the grinding disc is described in detail with reference to FIGS. 2 to 4.

In step S01, a mandrel is provided. A mandrel 20 provided comprises a bridge section 201 and an embedding section 202 extending from the bridge section 201. More specifically, the mandrel 20 is for connecting to the machine tool, and is assembled to the machine tool via the bridge section 201.

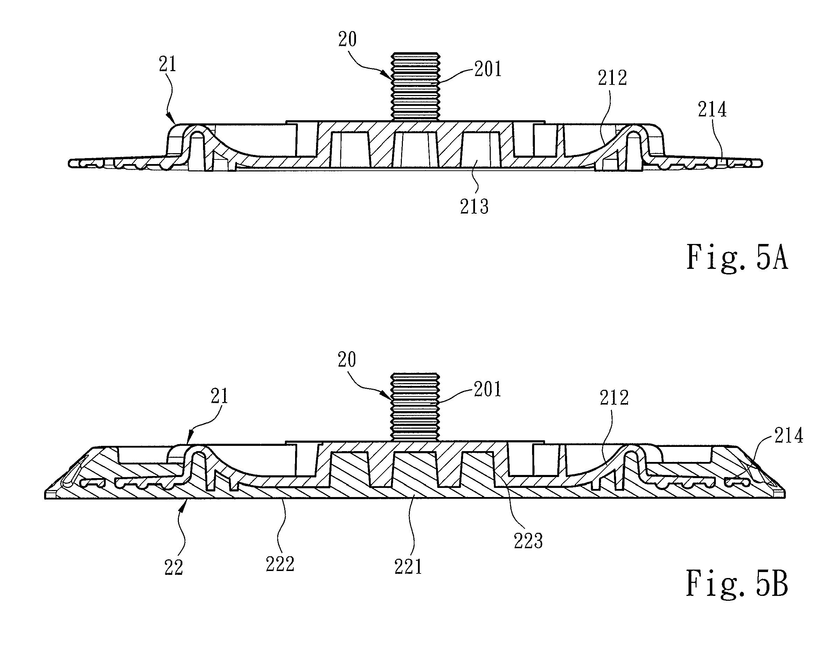

In step S02, a first injection mold step is performed. The mandrel 20 is placed in a first injection mold (not shown), and the first injection mold at least injects the first injection plastic material on the mandrel 20. When cooled, the first injection plastic material forms a preliminary carrier disc 21, as shown in FIG. 5A. The preliminary carrier plate 21 comprises a first embedding portion 211 for completely encircling the embedding section 202, and a carrier portion 212 extending towards a periphery of the first embedding portion 211. For example, the first injection plastic material is a mixed plastic material having fiberglass.

In step S03, a second injection mold step is performed. The mandrel 20 embedded with the preliminary carrier disc 21 is placed in a second injection mold, and the second injection mold at least injects the second injection plastic material on the preliminary carrier disc 21. When cooled, the second injection plastic material forms a secondary carrier disc 22 fixed at the preliminary carrier disc 21, as shown in FIG. 5B. The secondary carrier disc 22 comprises an engaging portion 221 adhered to and supported by the carrier portion 212, and a mounting surface 222 opposite to the engaging portion 221. Further, the second injection plastic material may be a plastic material as a group selected from polyurethane, epoxy, unsaturated polyester, and phenol aldehyde.

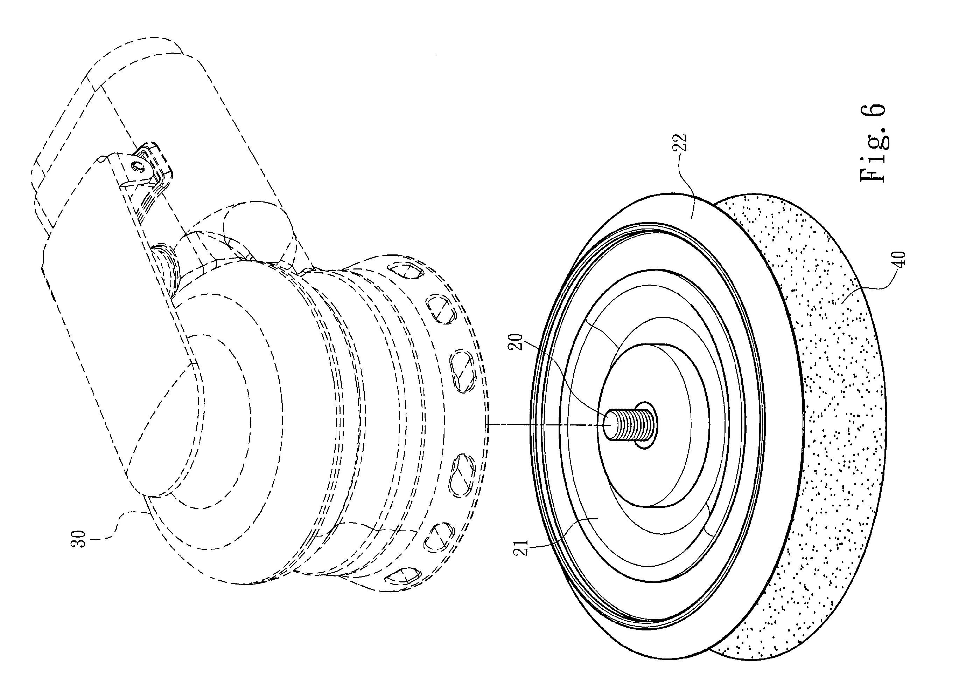

Referring to FIG. 6, the manufactured grinding disc may be assembled to the machine tool 30 via the bridge section 201 of the mandrel 20, and the grinding plate 40 may be assembled via the mounting surface 222 at the secondary carrier disc 22. Compared to the prior art, the preliminary carrier disc 21 weighs less than the assembly formed by the supporting disc 11, the upper clamping disc 12 and the lower clamping disc 13 (in FIG. 1) of a conventional grinding disc. Thus, the weight of the secondary carrier disc 22 can be increased to accordingly reinforce the structural strength and ductility of the secondary carrier disc 22. During grinding operations, the ductility of the secondary carrier disc 22 ensures that the mounting surface 222 conforms and comes into complete contact with the grinding target, so as to quickly provide appropriate deformation according to the contours of the grinding target. Compared to the foam supporting body 14 (in FIG. 1) conventionally formed by foaming, the secondary carrier disc 22 has preferred structural strength to offer not only preferred ductility but also greater resilience to damages during grinding operations. Further, as the structural strength of the secondary carrier disc 22 can withstand a greater eccentric force, the grinding disc of the present invention can be ideally applied to machine tools rotating at a greater speed to yield even better grinding effects.

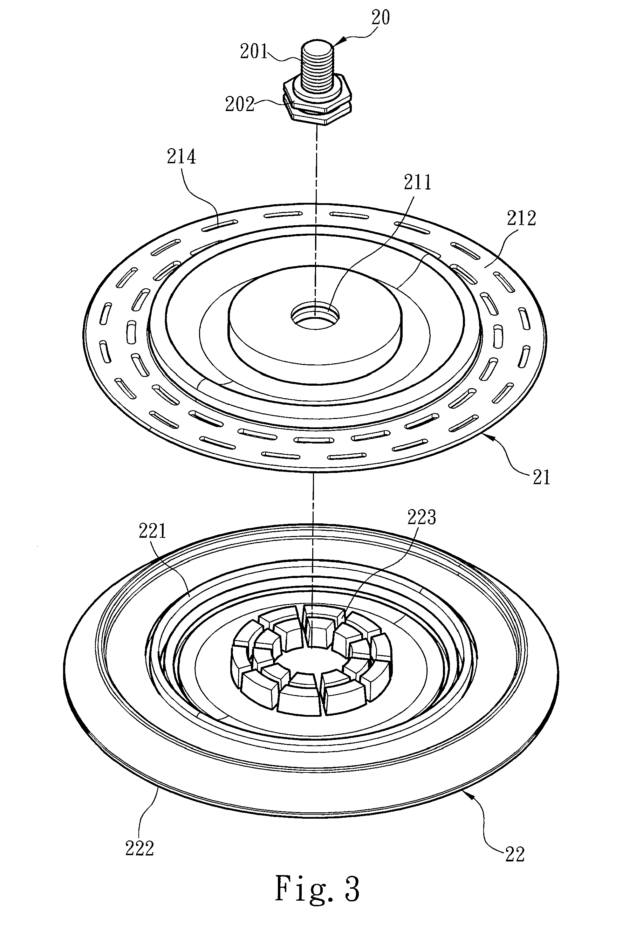

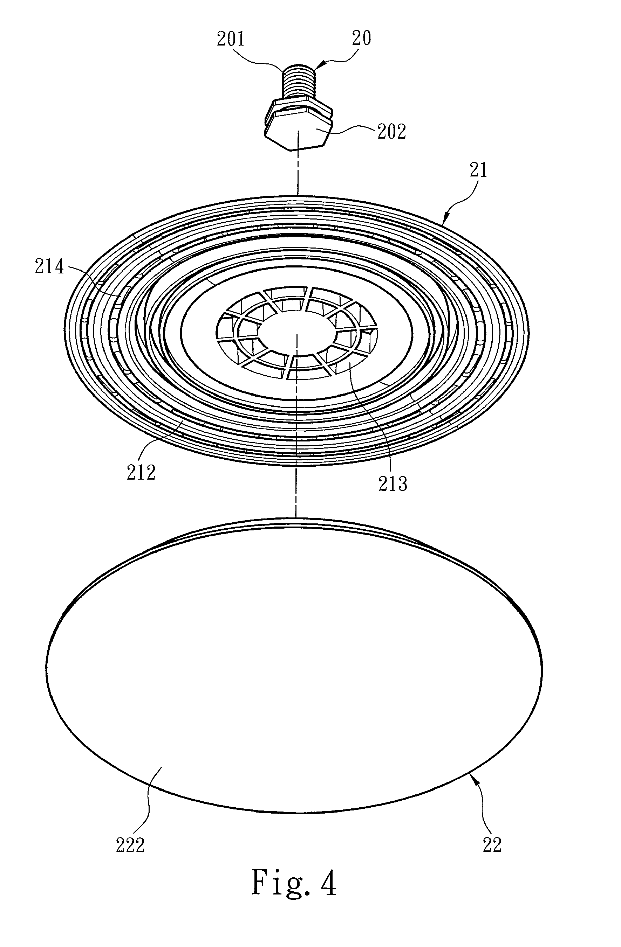

Again referring to FIGS. 3, 4, 5A and 5B, in step S02 of the method for manufacturing the grinding disc, the injected and formed preliminary carrier disc 21 further comprises a second embedding portion 213 formed on the carrier portion 212. The second embedding portion 213 is for increasing an engaging area of the secondary carrier disc 22 to allow the preliminary carrier disc 21 to be more closely adhered to the secondary carrier disc 22. Thus, in the second injection step S03, the secondary carrier disc 22 further comprises a third embedding portion 223 extended from the engaging portion 221 and corresponding to the second embedding portion 213. More specifically, the third embedding portion 223 is formed by the second injection plastic material injected on the second embedding portion 213. A position of the second embedding portion 213 may be adjusted according to actual design requirements. For example, as shown in FIG. 4, the second embedding portion 213 may be disposed neighboring to the first embedding portion 211 (FIG. 3). Alternatively, as shown in FIG. 3, the second embedding portion 214 is disposed at the periphery of the carrier portion 212, and the third embedding portion 223 is disposed correspondingly to the second embedding portion (213 or 214). It should be noted that, in addition to the details depicted in the drawings, various modifications can be made to the second embedding portion (213 or 214) and the third embedding portion 223 in other embodiments, as such modifications are also encompassed within the scope of the present invention.

In the grinding disc and the method for manufacturing the grinding disc of the present invention, the first injection plastic material and the second injection plastic material are sequentially injected on the mandrel to form the preliminary carrier disc. The preliminary carrier disc comprises the first embedding portion for completely encircling the embedding section of the mandrel, and the carrier portion extending towards the periphery of the first embedding portion. The second plastic material is then injected on the preliminary carrier disc to form the secondary carrier disc. The secondary disc comprises the engaging portion adhered to and supported by the carrier portion, and the mounting surface opposite to the engaging portion and for assembling to the grinding plate. Thus, the present invention is effectively overcomes the incapability of quickly producing appropriate deformation adapting to grinding requirements due weight restrictions and unsatisfactory structural strength of a foam supporting body of a conventional grinding disc. Therefore, the grinding disc and the method for manufacturing the grinding disc can adaptively produce appropriate deformation according to contours of the grinding target, and can be implemented in high-speed grinding machine tools.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A method for manufacturing a grinding disc, comprising:
providing a mandrel comprising a bridge section and an embedding section extended from the bridge section;
performing a first injection molding, to place the mandrel in a first injection mold, the first injection mold at least injecting a first injection plastic material on the mandrel, such that the first injection plastic material forms a preliminary carrier disc when cooled; and the preliminary carrier plate comprises a first embedding portion for completely encircling the embedding section, and a carrier portion extended from a periphery of the first embedding portion; and
performing a second injection molding, to place the mandrel embedded with the preliminary carrier disc in a second injection mold, the second injection mold at least injecting a second injection plastic material to the preliminary carrier disc, such that the second injection plastic material forms a secondary carrier disc fixed at the preliminary carrier disc when cooled; and the secondary carrier disc comprises an engaging portion adhered to and supported by the carrier portion, and a mounting surface opposite to the engaging portion.

2. The method of claim 1, wherein the preliminary carrier disc further comprises a second embedding portion formed on the carrier portion; and the secondary carrier disc further comprises a third embedding portion extended from the engaging portion and corresponding to the second embedding portion.

3. The method of claim 1 or 2, wherein the first injection plastic material is a mixed plastic material comprising fiberglass.

4. The method of any of the preceding claims, wherein the second injection plastic material is a plastic material made of a group selected from polyurethane, epoxy, unsaturated polyester, and phenol aldehyde.

5. A grinding disc, configured to be assembled to a machine tool and propelled by the machine tool, comprising:
a mandrel, comprising a bridge section, and an embedding section extended from the bridge section;
a preliminary carrier disc, formed by a first injection plastic material, comprising a first embedding portion for completely encircling the embedding section, and a carrier portion extended from a periphery of the first embedding portion; and
a secondary carrier disc, formed by a second injection plastic material, comprising an engaging portion adhered to and supported by the carrier portion, and a mounting surface opposite to the engaging portion.

6. The grinding disc of claim 5, wherein the preliminary carrier disc further comprises a second embedding portion formed on the carrier portion for increasing an engaging area between the preliminary carrier disc and the secondary carrier disc, and the second carrier disc further comprises a third embedding portion extended from the engaging portion and corresponding to the second embedding portion.

7. The grinding disc of claim 5 or 6, wherein the second embedding portion is disposed at a periphery of the carrier portion.

8. The grinding disc of any of claims 5 to 7, wherein the second embedding portion is disposed neighboring to the first embedding portion.

9. The grinding disc of any of claims 5 to 8, wherein the first injection plastic material is a mixed plastic material comprising fiberglass.

10. The grinding disc of any of claims 5 to 9, wherein the second injection plastic material is a plastic material made of a group selected from polyurethane, epoxy, unsaturated polyester, and phenol aldehyde.
